# EUROPEAN PATENT APPLICATION

(11) **EP 1 400 838 A1**
(43) Date of publication of application: **24.03.2004**
(21) Application number: 02405812.5
(22) Date of filing: 19.09.2002
(51) Int. Cl.: G02F 1/13363, G02F 1/1337

(54) **Thin films with corrugated surface topologies and method to produce them**

(71) Applicant: Rolic AG, 6301 Zug (CH)
(72) Inventor: Ibn-Elhaj, Mohammed, 4123 Allschwil (CH); Schadt, Martin, 4411 Seltisberg (CH)
(74) Representative: Liebetanz, Michael, Dipl.-Phys.

(57) **Abstract**

A method for producing a topologically structured film or coating comprises making a mixture of at least two liquid crystalline materials of which one is crosslinkable and the other is not crosslinkable. Then the mixture is applied to a substrate which has been pre-coated with an orientation layer. At least a substantial portion of the crosslinkable material is crosslinked by exposure to actinic radiation and at least a substantial portion of the not crosslinkable material is removed. During the step of crosslinking the intensity of the radiation is kept different in different areas to generate complex surface profiles with only one irradiation step.

## Description

This invention relates to the production of topologically structured films or coatings.

Such films typically exhibit surface profiles like pores, grooves, channels etc. in the micrometer- and sub-micrometer-range. They find application for instance as antireflective coatings, light diffusers, diffuse or directional reflectors, optical retarders, polarizing elements, or as substrates for aligning liquid crystals.

Recently, a new technology to generate corrugations at the surface of polymer films has been described. It is now known as monomer-corrugation (MC) technology and is disclosed for example in the PCT Patent Application Publication WO 01/29148 of Rolic AG, in M. Ibn-Elhaj & M. Schadt, Nature Vol. 410, p. 796-799 (2001) and in M. Ibn-Elhaj & M. Schadt, Asia Display / IDW '01 (Proceedings of the 21st International Display Research Conference), p. 505-508, all of which are incorporated herein by reference.

The MC-technology is based on the coating of blends of crosslinkable and non-crosslinkable materials - such as blends of liquid-crystalline pre-polymers and monomeric liquid crystals, where only the pre-polymers are crosslinkable. After coating, phase separation or demixing is progressively induced by crosslinking the crosslinkable component(s), preferably via exposure to ultraviolet radiation. Subsequent removal of the non-crosslinkable components) leaves pores in the crosslinked, solid polymer thin-film. Size and shape of the pores depend on MC-material design and film preparation. In addition to topologically isotropic pores, anisotropic MC-topologies can be generated, e.g. on surfaces exhibiting anisotropic aligning forces, such as orientation layers for liquid crystals.

Pore or groove period and height of the vertical MC-profile as well as the distribution and volume fraction of the pores or grooves are tunable by adjusting production parameters, in particular kind of solvents, ratio of the mixture, concentration in the solvent, film thickness, intensity, duration, wavelength, angle of incidence and state of polarization of light as well as aligning direction and strength of alignment.

In spite of the capability for variation of the known method, there is still a need for new and improved processing options. In particular, it would be desirable to have production methods for MC-films, which allow generating more complex surface profiles, for instance profiles that show two or more different, advantageously superimposed types of topologies.

Accordingly, a first aspect of the present invention provides a method for producing a topologically structured film or coating, which comprises making a mixture of at least two materials of which one is crosslinkable and the other is not crosslinkable, applying the mixture to a substrate, crosslinking at least a substantial portion of the crosslinkable material by exposure to actinic radiation, and removing at least a substantial portion of the not crosslinkable material, characterized in that during crosslinking the intensity of the radiation is kept different in different areas.

The invention also extends to a topologically structured film or coating prepared by a method comprising making a mixture of at least two materials of which one is crosslinkable and the other is not crosslinkable, applying the mixture to a substrate, crosslinking at least a substantial portion of the crosslinkable material by exposure to actinic radiation, and removing at least a substantial portion of the not crosslinkable material, characterized in that during crosslinking the intensity of the radiation is kept different in different areas.

Preferably, the quantity of the not crosslinkable material in the mixture is at least one fiftieth (2 %), more preferably at least one twentieth (5 %), part by weight per part of the crosslinkable material.

As actinic radiation, light, advantageously UV light, is preferred.

For certain applications, the light may advantageously be polarized.

In a preferred embodiment of the invention, the intensity of the radiation is kept different in different areas during crosslinking by the use of a photo mask.

Another favorable embodiment of the invention uses a filter having areas of different light-transmittivity, such as a halftone mask or grey level mask, to keep the intensity of the radiation different in different areas during crosslinking.

In other embodiments, an interference pattern can be used to produce a radiation, which has different intensity in different areas.

Usefully, the crosslinkable material may be maintained in an oriented state during crosslinking.

The orientation may be imposed for example by an aligned substrate surface or an underlying orientation layer, which inter alia may be a photo-oriented layer such as an azo dye or linearly polymerized photopolymer or a mechanically produced orientation layer such as a rubbed polyimide. An other possibility would be to use a mixture that itself contains a photo-orientable component; examples of this kind of orientation method can for instance be found in the PCT Patent Application Publication WO 99/64924 of Rolic AG.

Preferably, the crosslinkable material used to make the topologically structured film or coating comprises molecules of a rod-like (calamitic) shape. More preferably, the crosslinkable material is liquid crystalline, and in such a case the non-crosslinkable material advantageously may also be liquid crystalline.

Examples of suitable materials are well known to those skilled in the art. Examples of such materials and methods of making and using the materials can be found in, for instance, European Patent Application Publication EP-0331233, PCT Patent Application Publications WO-95/24454, WO-00/04110, WO-00/07975, WO-00/48985, WO-00/55110 and WO-00/63154, and U.S. Patent US-5,567,349.

It is a further advantage of topologically structured films or coatings produced according to the invention that they can be made in a single-layer coating method. In addition, the production method makes it possible to generate complex surface profiles with only one irradiation step.

The present invention is believed to be suitable for the production of topologically structured films or coatings useful in many different fields.

In particular, it will be applicable to optical elements such as diffusers and reflectors, more particularly diffusers or reflectors having special properties, e.g. multidirectionality, paper-white appearance or polarization-independency, but also viewing angle compensators for displays as well as anti-glare and anti-reflective layers and combinations thereof.

A further application are authentication elements. Such elements may e.g. be used to safeguard banknotes, credit cards, securities, identity cards and the like against forgery and copying.

In addition, it may for example also be advantageously used in applications where conventionally other patterning techniques like lithographic methods, embossing, molding, contact printing or writing are used, especially in cases where these known methods are elaborate and expensive.

The above summary of the present invention is not intended to describe each disclosed embodiment or every implementation of the invention. The invention may be more completely understood in consideration of the following description of various embodiments of the invention in connection with the accompanying drawings, in which:
- Fig. 1: is a schematic illustration of a crosslinking step employing a photo mask, which may be used in the production of topologically structured films or coatings according to the invention;
- Fig. 2a: shows an optical microscopy photograph of an example (Example 1) of a topologically structured film or coating made according to the invention;
- Fig. 2b: gives a surface profiler sectional profile of the topologically structured film or coating shown in Fig. 2a;
- Fig. 2c: is a graph of the two-dimensional power spectral density function of the topologically structured film or coating shown in Fig. 2a;
- Fig. 2d: is a graph of the one-dimensional power spectral density function of the topologically structured film or coating shown in Fig. 2a;
- Fig. 3a: shows an optical microscopy photograph of a further example (Example 2) of a topologically structured film or coating made according to the invention;
- Fig. 3b: is a graph of a sectional profile of Example 2;
- Fig. 3c: is a graph of the grooves frequency distribution of Example 2, represented as averaged one-dimensional power spectral density function 1D-PSD(f);
- Fig. 3d: is an atomic force microscope image of the detail marked with a white rectangle in Fig. 3a;
- Fig. 3e: is a graph of a sectional profile corresponding to the atomic force microscope image of Fig. 3d;
- Fig. 3f: is a graph of the grooves frequency distribution corresponding to the atomic force microscope image of Fig. 3d;
- Fig. 4a: shows an optical microscopy photograph of a next example (Example 3) of a topologically structured film or coating made according to the invention;
- Fig. 4b: is a graph of an average profile of Example 3 in a direction perpendicular to the orientation direction of the underlying orientation layer;
- Fig. 4c: is an atomic force microscope image (19x16 µm) of a detail in the dark areas of Fig. 4a;
- Fig. 4d: is a graph of a sectional profile of Example 3 in a direction parallel to orientation direction of the underlying orientation layer;
- Fig. 4e: is a graph of the two-dimensional power spectral density function of Example 3;
- Fig. 5a: is an atomic force microscope image (23x23 µm) of yet another example (Example 4) of a topologically structured film or coating made according to the invention;
- Fig. 5b: is a graph of the one-dimensional power spectral density function of Example 4;
- Fig. 5c: is a graph of an average profile of Example 4 in a direction perpendicular to the orientation direction of the underlying orientation layer;
- Fig. 5d: is a graph of a sectional profile of Example 4 in a direction parallel to orientation direction of the underlying orientation layer along the trace indicated as a white line in Fig. 5a;
- Fig. 6a: is a graph of the grooves frequency distributions of three samples of still another example (Example 5) of a topologically structured film or coating made according to the invention;
- Fig. 6b: is a graph of the grooves height distributions of the three samples of Example 5;
- Fig. 7a: is an illustration of a grey scale mask used for a further example (Example 6) of a topologically structured film or coating made according to the invention;
- Fig. 7b: shows an optical microscopy photograph of Example 6;
- Fig. 7c: shows three atomic force microscope images (30x30 µm) of details in stripes 1, 3 and 6 indicated in Fig. 7b;
- Fig. 8a: shows an optical microscopy photograph of a further example (Example 7) of a topologically structured film or coating made according to the invention;
- Fig. 8b: is a graph of a cross sectional profile from an atomic force microscopy image taken at the boundary of areas 1 and 2 indicated in Fig. 8a; and
- Fig. 9: shows an optical microscopy photograph of another example (Example 8) of a topologically structured film or coating made according to the invention.

Some examples illustrating the invention will now be described.

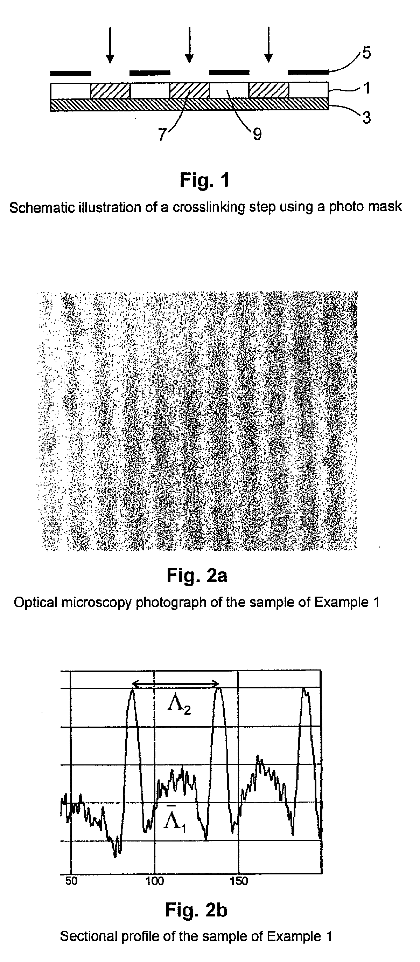

In Fig. 1, a schematic representation of the crosslinking step using a photo mask is shown illustrating said crosslinking step for a number of the following examples. A layer 1 of a material containing crosslinkable and not crosslinkable compounds according to the MC technology is coated on a substrate 3. The layer 1, which may be oriented, for instance by an aligned substrate surface or an underlying orientation layer, will then be irradiated through the openings of a photo mask 5 to produce areas 7 where more and other areas 9 where less or no crosslinking processes take place.

### EXAMPLE 1

This example illustrates a first illustrative embodiment of the invention. Here, as actinic radiation for crosslinking ultraviolet light is used and its intensity is made different in different areas by the use of a photo mask, i.e. a mask having areas, which are light-transmissive, and other areas, which are substantially opaque.

For the preparation of the topologically structured film or coating of this example, a mixture of photocrosslinkable and non-crosslinkable liquid crystal monomers was used. The chemical structure of the compounds is shown below. Compounds A, B and C are crosslinkable diacrylate monomers (pre-polymers), and Compound D, which is also named 5CAPO2, is a non-crosslinkable nematic liquid crystal monomer.

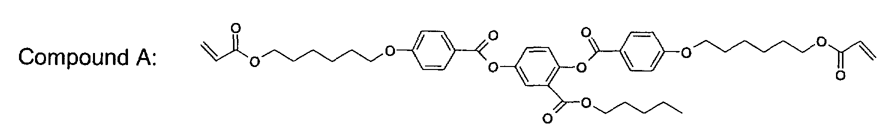

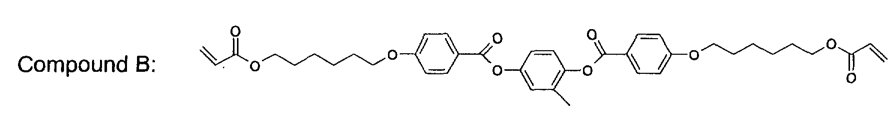

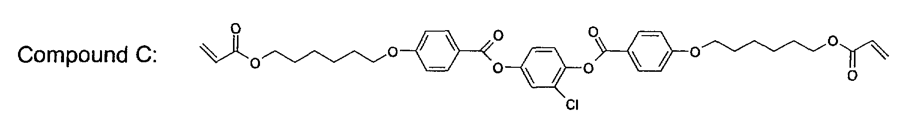

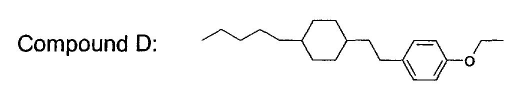

The mixture was prepared from 40 wt% of Compound A, 7.5 wt% of Compound B, 2.5 wt% of Compound C, 49 wt% of Compound D, 0.5 wt% of a photoinitiator (Irgacure (trade mark) 369 by CIBA), and 0.5 wt% of BHT (butyl hydroxy toluene) as an inhibitor.

From the above mixture, two solutions, a 22 wt% solution (MC-Solution-1) and a 15 wt% solution (MC-Solution-2), were made in a buthyl acetate / ethanol mixture (19 parts /1 part). The solutions were homogenized with moderate stirring for 5 minutes using ultrasonic vibrations (with a Sonifier (trade mark) "W-250" digital by BRANSON Ultrasonics Corporation), and filtered trough a 0.2 micrometer filter.

For the further preparation, an orientation layer was used. In the present example, this was an orientation layer made by contact-free linear photo-polymerization (LPP) technology. Specifically, a 2 % solution in cyclopentanon of a photo-orienting material, JP 265, commercially available from Vantico, which is a linearly photo-polymerizable polymer, was thinly spin coated at 3000 rpm onto glass plates. The plates were warmed for 10 minutes at 180 °C on a hotplate. The resulting layer had a thickness of about 60 nanometers. The layer was then irradiated for 30 seconds at room temperature with linearly polarized UV light from a 200 W mercury high-pressure lamp. The intensity of the UV light at the plate was determined as 1 mW/cm². The direction of polarization of light lay in the plane perpendicular to the plates.

To make the samples, MC-Solution-1 described above was thinly spin coated at 2100 rpm onto an LPP orientation layer prepared in the above-mentioned manner. The plates were warmed for 2 seconds at 50 °C on a hotplate.

The coated layer was then irradiated through a photo mask by isotropic (non-polarized) light from a mercury lamp to cause crosslinking of the crosslinkable liquid crystal monomers. The irradiation took place for 1 minute under nitrogen at room temperature and at an intensity in the ultraviolet of 1 mW/cm². The photo mask consisted of parallel and equidistant stripes, of chromium, having a width of about 52 micrometers. During the irradiation, the stripes were aligned along the orientation direction of the orientation layer.

Finally, the layer was rinsed with ethanol to remove the non-crosslinked material. The removal of the non-crosslinked material may be as complete as possible. However, the removal of the non-crosslinked material may also be only partial as long as an essential part of the non-crosslinked material is removed.

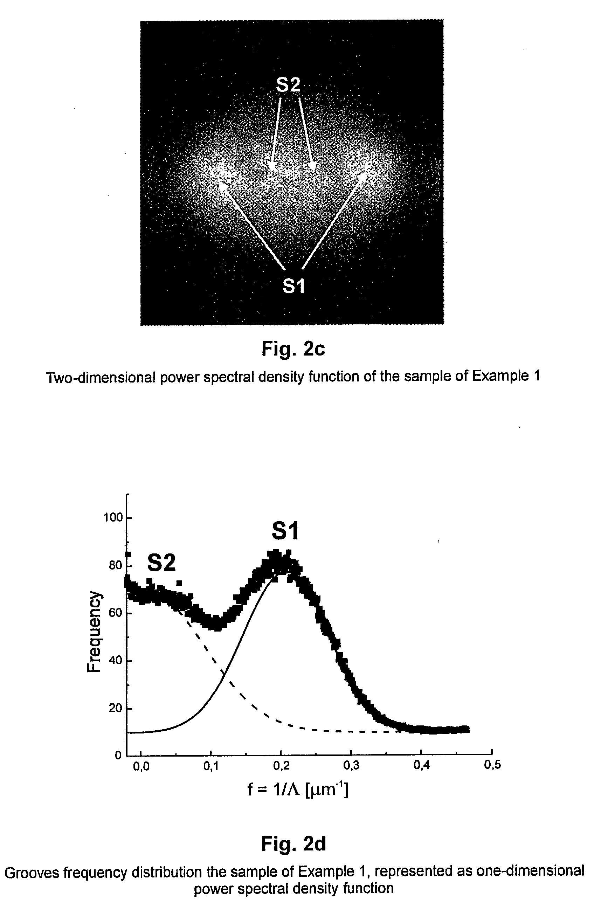

Contact-mode atomic force microscopy (AFM) and optical microscopy were used to investigate the resulting corrugated crosslinked liquid crystal film or coating. Some results are given in Fig. 2. Fig. 2a shows an optical microscopy photograph and Fig. 2b is a sectional profile of the sample performed using a surface profiler (Alpha-step 500, from Tencor). It can be seen that two clearly distinguishable superimposed types of corrugation structures were formed. Both structures consist of grooves, which are elongated in the direction of the underlying orientation layer. However, shape and dimensions are different. The first structure (S1 ) has an average grooves period Λ₁ of about 4 micrometer and the second structure (S2) an average grooves period Λ₂ of about 50 micrometer. It is believed that the first structure results from the MC phase-separation method and the second structure is a consequence of the photo mask.

A possible means to characterize the topological structure or surface profile of such films in a more general way is the power spectral density function PSD(f). It involves the spatial frequency vector f and can be derived directly from surface profile data by taking the square of the Fourier transform of the surface profile h(x,y). Thus, the PSD is a purely surface quantity and contains information (periodicity, shape, etc.) about the surface. The reciprocal of the spatial frequency vector f is the spatial wavelength (grooves period) Λ=1/f.

Fig. 2c is a graph of the two-dimensional PSD function calculated from the square of the Fourier transform of the surface profile of Fig. 2a. It shows the two structures S1 and S2. Furthermore, the corresponding one-dimensional PSD function is given in Fig. 2d, where again the two structures can be seen; the squares are calculated points and as solid and dashed lines possible fits to the structures S1 and S2, respectively, are plotted.

### EXAMPLE 2

The preparation of this example was similar to Example 1, except that a photo mask having stripes of a different width, about 6 micrometers instead of about 52 micrometers as in the previous example, was employed.

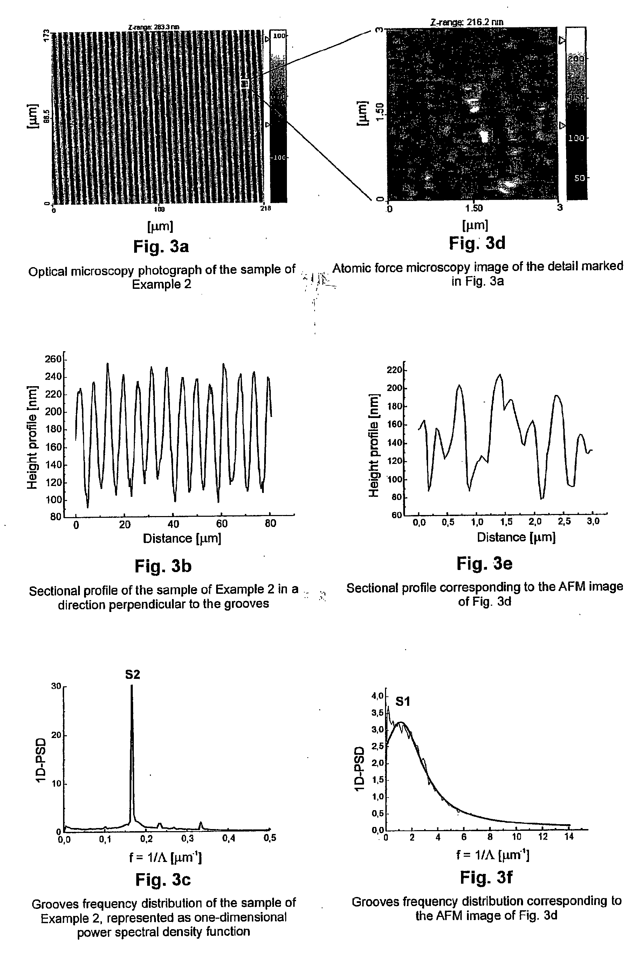

Using optical microscopy and contact-mode AFM, it was found that the resulting corrugated crosslinked film or coating comprises two superimposed types of corrugation structures. Fig. 3a shows an optical microscopy photograph of the sample, and Fig. 3b and Fig. 3c give the corresponding sectional profile and one-dimensional PSD function, respectively. In the resolution of the optical microscopy image, a structure consisting of grooves elongated in the direction of the stripes of the photo mask (i.e. also in the direction of the underlying orientation layer) and having an average grooves period of about 6 micrometers and an average groove height of about 150 nanometers is recognizable. In addition, if the resolution is made larger, a second structure can be seen. Fig. 3d shows a contact-mode AFM image of the detail marked with a white square in Fig. 3a. The corresponding sectional profile and one-dimensional PSD function are given in Fig. 3e and Fig. 3f, respectively. The thus discernible second structure has grooves elongated in the direction of the underlying orientation layer and having an average grooves period of about 800 nanometers and an average groove height of about 100 nanometers.

### EXAMPLE 3

This example corresponds to Example 1. However, in this case the stripes of the photo mask used were aligned perpendicular to the orientation direction of the orientation layer.

To prepare the samples, MC-Solution-2 described above was thinly spin coated at 2000 rpm onto an LPP orientation layer. The plates were warmed for 3 seconds at 50 °C on a hotplate.

Then, the coated layer was irradiated by isotropic (non-polarized) light at an intensity in the ultraviolet of 15 mW/cm² for 1 minute through a photo mask. The photo mask had parallel and equidistant stripes of chromium with a width of about 52 micrometers and was aligned perpendicular to the orientation direction of the LPP orientation layer.

After the crosslinking step, the layer was rinsed with ethanol to remove the non-crosslinked material.

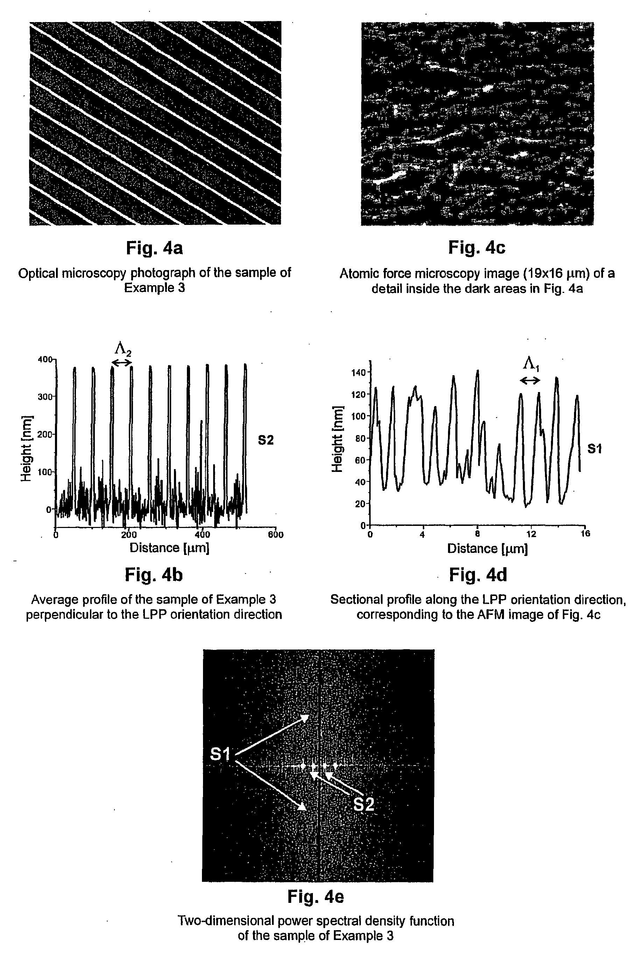

As before, contact-mode AFM and optical microscopy were used to inspect the resulting corrugated crosslinked film or coating. Fig. 4a is an optical microscopy photograph of the sample, Fig. 4b gives the corresponding average profile in the direction perpendicular to the orientation of the orientation layer, Fig. 4c shows a contact-mode AFM image of 19x16 micrometers taken inside the dark areas of the photograph of Fig. 4a, Fig. 4d gives the corresponding sectional profile parallel to the orientation of the orientation layer, and Fig. 4e represents a two-dimensional Fourier transform (PSD function) of an AFM image of 80x80 micrometers. It turns out that also in this case two corrugation structures were formed. The first structure (S1 ) consists of micro-grooves that are elongated in the direction of the underlying orientation layer. It has an average grooves period Λ₁ of about 1.5 micrometers and an average groove height of about 70 nanometers (see Fig. 4c and 4d). The second structure (S2) consists of micro-grooves that are aligned perpendicular to the grooves of the first structure (i.e. perpendicular to the direction of the orientation layer and parallel to the stripes of the photo mask). It has an average grooves period Λ₂ of about 50 micrometers and an average groove height of about 370 nanometers (see Fig. 4a and 4b).

### EXAMPLE 4

The preparation of this example was similar to Example 3, except that a photo mask having stripes of a different width, about 6 micrometers instead of about 52 micrometers, and a light intensity in the ultraviolet of 2.2 mW/cm² instead of 15 mW/cm² was used.

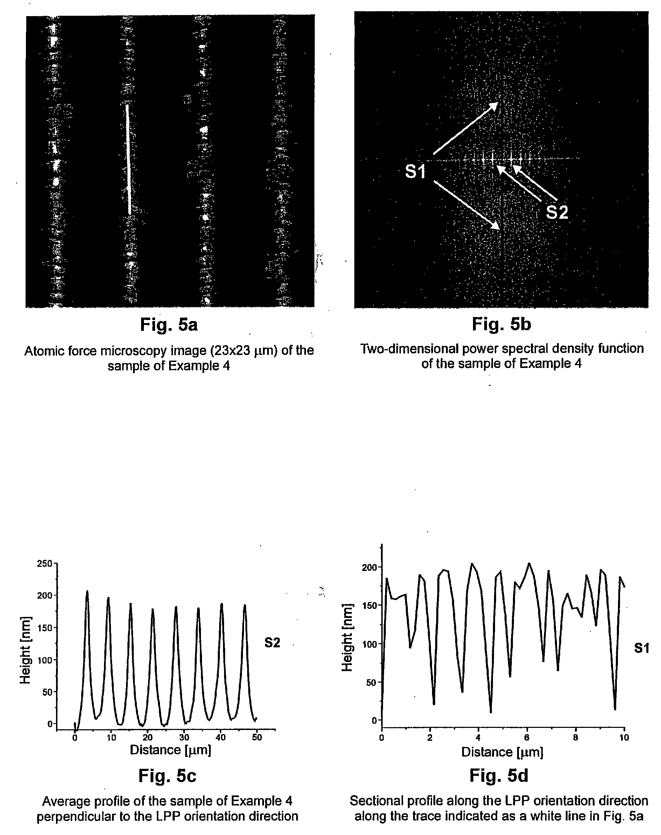

The resulting corrugated crosslinked film or coating again comprises two superimposed types of corrugation structures. In Fig. 5a a contact-mode AFM image of 23x23 micrometers of the sample is shown. The corresponding two-dimensional Fourier transform (PSD function) given in Fig. 5b indicates the existence of two structures (S1 and S2). This finding is confirmed by Fig. 5c showing the average profile in the direction perpendicular to the orientation of the orientation layer (structure S2) and Fig. 5d showing the sectional profile parallel to the orientation of the orientation layer (structure S1). Structure S1 consists of micro-grooves that are elongated in the direction of the underlying orientation layer. It has an average grooves period Λ₁ of about 1.3 micrometers and an average groove height of about 90 nanometers. Structure S2 on the other hand consists of micro-grooves that are aligned perpendicular to the grooves of the first structure (i.e. perpendicular to the direction of the orientation layer and parallel to the stripes of the photo mask). It has an average grooves period Λ₂ of about 6 micrometers and an average groove height of about 170 nanometers.

### EXAMPLE 5

This example illustrates a further illustrative embodiment of the invention where instead of an ordinary photo mask a halftone mask is used. In a halftone mask, the light transmittance for a given area is determined by the size and ratio of opaque spots to clear spots. A mask in this way may also have different areas with different light transmittance, thus producing different "grey levels" when illuminated with light.

As in Example 1, MC-Solution-1 was thinly spin coated at 2100 rpm onto an LPP orientation layer.

The coated layer was then irradiated for 1 minute under nitrogen at room temperature by isotropic (non-polarized) light from a mercury lamp at an intensity in the ultraviolet of 10 mW/cm² to crosslink the crosslinkable liquid crystal monomers. However, during the crosslinking method, a grey scaled and homogeneous mask with a controlled amount of black to white content, i.e. a halftone mask, was placed between the layer to be irradiated and the mercury lamp in order to control the amount of UV light that reaches the layer.

After irradiation, the layer was rinsed with ethanol to remove the non-crosslinked material, and annealed at 50 °C for about 5 minutes to remove the residual solvent.

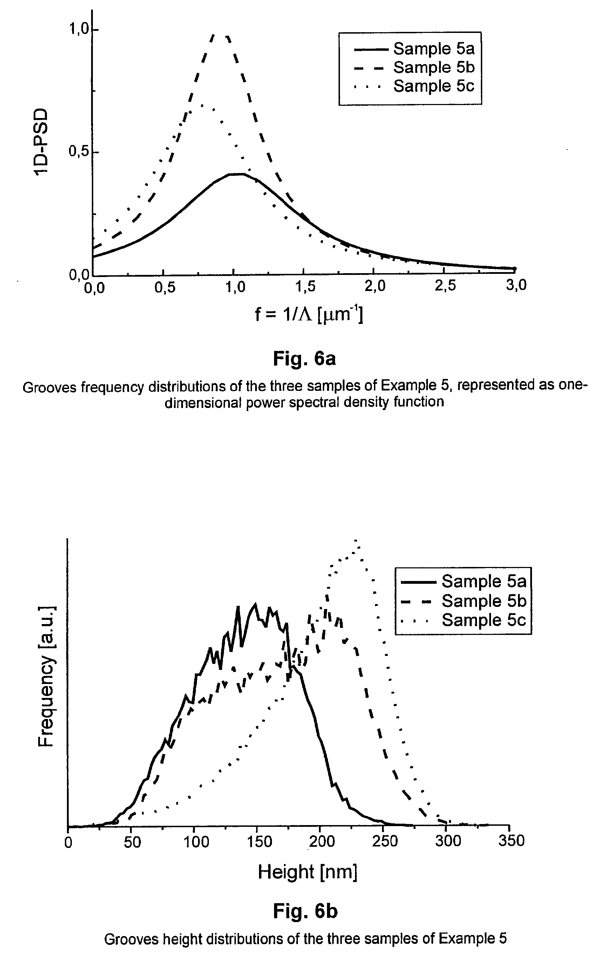

In this way, three samples 5a, 5b and 5c were prepared using three different masks having a black to white content of 80/20, 50/50 and 20/80, respectively. The corresponding grooves frequency distributions (represented as one-dimensional power spectral density function) and grooves height distributions are given in Fig. 6a and Fig. 6b, respectively, and it can be seen that in particular the groove height was considerably affected by the difference of the black to white content of the masks. Thus, this example shows that irradiation through a halftone mask may be used to produce varied corrugated cross-linked film or coating structures dependent on the black to white content - the grey scale - of the mask.

### EXAMPLE 6

As in Example 5, also in this example a halftone mask was used to control the UV light intensity. The halftone mask is illustrated in Fig. 7a. It had six parallel stripes about 2 millimeter wide and showing different grey scale levels (100 % black in stripe 1, 80 % in stripe 2, 60 % in stripe 3, 40 % in stripe 4, 20 % in stripe 5 and 0 % in stripe 6).

To prepare the samples, MC-Solution-2 described above was thinly spin coated at 2000 rpm onto an LPP orientation layer. The coated layer was then irradiated through the halftone mask by isotropic (non-polarized) light at an intensity in the ultraviolet of 6.7 mW/cm² for 1 minute. During the irradiation, the stripes of the mask were oriented parallel to the orientation direction of the orientation layer.

After the crosslinking step, the layer was rinsed with ethanol to remove the non-crosslinked material.

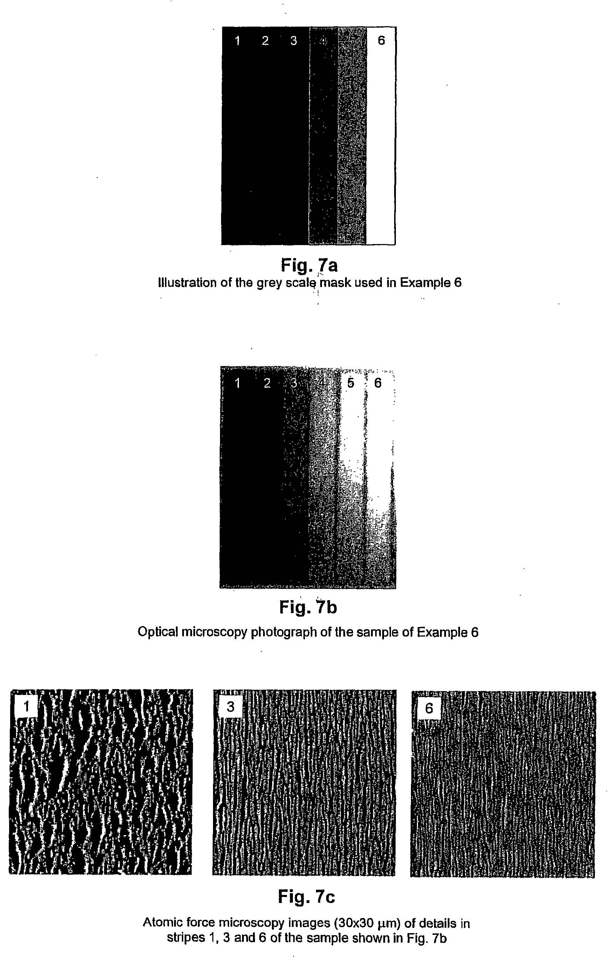

Observation of the resulting layer with optical microscopy in transmission mode between crossed polarizers showed that corresponding to the six stripes of the halftone mask six areas having different light-scattering and -transmission properties existed in the layer. An optical microscopy photograph of the sample is shown in Fig. 7b. Using contact-mode AFM, it was found that in each area a corrugated structure was present having micro-grooves, which were elongated along the orientation direction of the underlying orientation layer. However, the morphology and groove size was different in each area. The average grooves period and groove height was about 2.2 micrometers and 84 nanometers for stripe 1, 1.3 micrometers and 152 nanometers for stripe 2, 1.2 micrometers and 160 nanometers for stripe 3, 1.04 micrometers and 150 nanometers for stripe 4, 1.04 micrometers and 145 nanometers for stripe 5 and 1.0 micrometers and 120 nanometers for stripe 6. Examples of AFM images for the areas corresponding to 100 %, 60 % and 0 % black in the grey scale mask are given in Fig. 7c.

### EXAMPLE 7

Still a further embodiment of the invention is illustrated by the following example. It uses a photo mask to produce a pattern of coated and uncoated areas.

To prepare the samples, MC-Solution-2 described above was thinly spin coated at 2000 rpm onto an LPP orientation layer. The plates were warmed for 2 seconds at 50 °C on a hotplate.

Then, the coated layer was irradiated by isotropic (non-polarized) light at an intensity in the ultraviolet of 0.7 mW/cm² for 1 minute through a photo mask. The photo mask in this case was a thin chromium layer that had a pattern of rectangular openings of different sizes (about 200x400 and 600x1000 micrometers). The short sides of the rectangles were aligned parallel to the orientation direction of the LPP orientation layer.

After the crosslinking step, the layer was rinsed with ethanol to remove the non-crosslinked material.

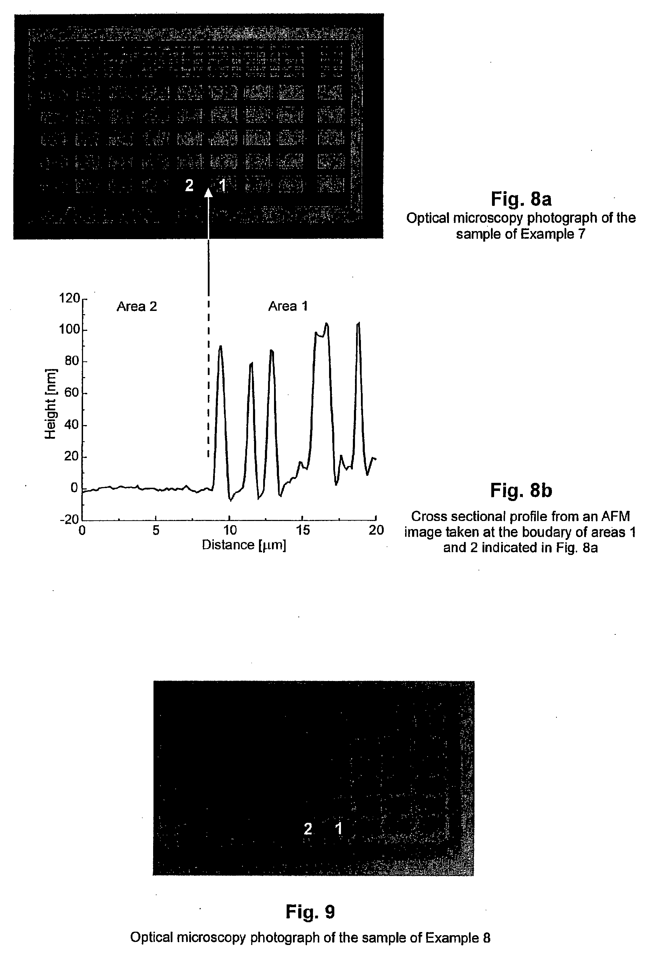

Observation of the resultant corrugated film or coating with optical microscopy in transmission mode between crossed polarizers showed the existence of two different areas having different light-scattering and -transmission properties. An optical microscopy photograph is shown in Fig. 8a. The bright areas 1 correspond to the openings of the photo mask, i.e. to the UV illuminated parts. They consist of a crosslinked liquid crystal polymer layer with a corrugation structure of micro-grooves, which are elongated along the direction of the underlying orientation layer. The grooves period is about 3 micrometers and the average groove height about 100 nanometers. In the black areas 2 on the other hand, which correspond to the non-illuminated parts, no coating is found. These findings are confirmed by AFM measurements, as can for instance be seen from Fig. 8b. The figure gives the cross sectional profile from an AFM image taken in the region of the boundary between area 1 and area 2 indicated in Fig. 8a.

### EXAMPLE 8

For this example, the procedure of Example 7 was repeated. However, instead of placing the photo mask between the illumination source and the coated layer, the mask was placed behind the coated glass plate and furthermore covered on its back with a black background. As a result, the light transmitted through the coated glass plate is strongly reflected from the chromium-coated areas and much less from the open areas of the photo mask.

Observation of the resultant corrugated film or coating with optical microscopy in transmission mode between crossed polarizers showed the existence of two different areas having different light-scattering and -transmission properties. An optical microscopy photograph is shown in Fig. 9. Using AFM investigations, it was found that in this case both areas, areas 1 corresponding to the openings and areas 2 corresponding to chromium covered regions of the photo mask, consisted of a crosslinked liquid crystal polymer layer with a corrugation structure of micro-grooves, which are elongated along the direction of the underlying orientation layer. However, the type of corrugation was different. In area 1, the grooves period was about 1.2 micrometer and the average groove height about 84 nanometer, whereas in area 2, the period was about 1.0 micrometer and the average height about 100 nanometer.

The photomask according to example 8 can also be a halftone mask. It is also possible to place the mask behind the coated transparent substrate, e.g. a glass plate, and not to provide any additional background material. The intensity of the actinic radiation can be kept different in different areas during crosslinking through different areas of different reflectivity provided - seen from the illumination source - behind the coated layer and behind the transparent substrate.

It should be understood that the intention is not to limit the invention to particular embodiments described. On the contrary, the intention is to cover all modifications, equivalents, and alternatives falling within the spirit and scope of the invention. Various modifications, equivalent processes, as well as numerous structures to which the present invention may be applicable will be readily apparent to those of skill in the art to which the present invention is directed upon review of the instant specification.

## Claims

1. A method for producing a topologically structured film or coating, which comprises making a mixture of at least two materials of which one is crosslinkable and the other is not crosslinkable, applying the mixture to a substrate, crosslinking at least a substantial portion of the crosslinkable material by exposure to actinic radiation, and removing at least a substantial portion of the not crosslinkable material, **characterized in that** during crosslinking the intensity of the radiation is kept different in different areas.

2. The method according to claim 1, wherein the quantity of the not crosslinkable material in the mixture is at least one fiftieth (2 %) part by weight per part of the crosslinkable material.

3. The method according to claim 1, wherein the quantity of the not crosslinkable material in the mixture is at least one twentieth (5 %) part by weight per part of the crosslinkable material.

4. The method according to claim 1, wherein light is used as actinic radiation.

5. The method according to claim 1, wherein UV light is used as actinic radiation.

6. The method according to claim 4 or 5, wherein the light is polarized.

7. The method according to claim 1, wherein the intensity of the actinic radiation is kept different in different areas during crosslinking by the use of a photo mask.

8. The method according to claim 1, wherein the intensity of the actinic radiation is kept different in different areas during crosslinking by the use of a filter having areas of different light-transmittivity, such as a halftone mask or grey level mask.

9. The method according to claim 1, wherein the intensity of the actinic radiation is kept different in different areas during crosslinking by the use of different areas of different reflectivity provided - seen from the illumination source - behind the coated layer and behind a transparent substrate.

10. The method according to claim 9, wherein different areas of different reflectivity are provided through a reflective photo mask placed behind the coated layer and behind the transparent substrate.

11. The method according to claim 1, wherein the intensity of the actinic radiation is kept different in different areas during crosslinking by the use of an interference pattern to produce a radiation, which has different intensity in different areas.

12. The method according to claim 1, wherein the crosslinkable material is maintained in an oriented state during crosslinking.

13. The method according to claim 1, wherein the crosslinkable material comprises molecules of a rod-like or calamitic shape.

14. The method according to claim 13, wherein the crosslinkable material is liquid crystalline and/or the non-crosslinkable material is liquid crystalline.

15. A topologically structured film or coating which has been created by a method according to any preceding claim.

16. The film or coating according to claim 15, wherein the surface profile shows two or more different types of topologies.

17. The film according to claim 15, wherein the surface profile shows two or more different types of superimposed topologies.

18. The film according to claim 15, wherein the frequency distribution of the surface profile topology in one surface direction comprises at least two significant values, wherein at least two of these values are separated one from another by a multiplication factor of at least 5.

19. The film according to claim 15, wherein the frequency distribution of the surface profile topology in a first surface direction comprises a first significant value, and the frequency of the surface profile topology in a second surface direction comprises a second significant value, the two values are separated one from another by a multiplication factor of at least 5.

20. The film according to claim 18 or 19, wherein said significant values are between 0,01 µm⁻¹ and 2,5 µm⁻¹.
